# EUROPÄISCHE PATENTSCHRIFT

(11) **EP 2 406 032 B1**
(45) Veröffentlichungstag und Bekanntmachung des Hinweises auf die Patenterteilung: **08.05.2013**
(21) Anmeldenummer: 10711834.1
(22) Anmeldetag: 02.03.2010
(51) Int. Cl.: B23K 9/32, B23K 37/00, B08B 15/04, F23J 15/06, F24F 7/06

(54) **Verfahren zur Behandlung von metallischen Partikeln enthaltendem Schweissrauch unter Verwendung der Energie einer Oxidationsapparatur**
Method of treating welding smoke containing metallic particles using the energie of an oxidising device
Méthode de traitement de fumée de soudage contenant des particules en utilisant l'énergie d'un dispositif d'oxydation

(30) Priorität: 10.03.2009 DE 102009011961
(43) Veröffentlichungstag der Anmeldung: 18.01.2012
(73) Patentinhaber: Areva NP GmbH, 91052 Erlangen (DE)
(72) Erfinder: SCHUBERT, Thomas, 59494 Soest (DE); GESSLER, Michael, 63773 Goldbach (DE); BLOCK, Bernd, 91054 Erlangen (DE); MINDT, Markus, 91052 Erlangen (DE)
(74) Vertreter: Tergau & Walkenhorst
(86) Internationale Anmeldenummer: PCT/EP2010/001280
(87) Internationale Veröffentlichungsnummer: WO 2010/102740

(56) Entgegenhaltungen:
- GB-A- 2 277 699
- JP-A- 2000 157 822
- JP-A- 2000 252 621
- US-A- 4 947 768
- US-A- 6 065 469
- US-A1- 2008 083 333

## Beschreibung

Die Erfindung bezieht sich auf ein Verfahren zur Behandlung von metallische Partikel enthaltendem Schweißrauch gemäß dem Oberbegriff des Anspruch 1.

JP 2000 157822 A und US 2008/083333 A1, die je den Oberbegriff des Anspruchs 1 offenbaren, beschreiben jeweils eine Absaugvorrichtung ohne eine besondere Apparatur zum Behandeln der metallischen Partikel des Schweißrauches.

JP 2000 252621 A offenbart eine Absaugvorrichtung mit einer Heizspule, aber mit keinem Hinweis zum Verwenden dieser Heizspule für die Oxidierung von entzündlichen metallischen Partikeln.

US 4 947 768 A offenbart die Verwendung von Widerstandspulen oder Induktionsspulen in einer Rauchreinigungsvorrichtung, ebenfalls mit keinem Hinweis zum Verwenden dieser Heizspule für die Oxidierung von entzündlichen metallischen Partikeln.

US 6 065 469 und GB 2 277699 A offenbaren jeweils die Verwendung einer offenen Flamme zum Oxidieren von metallischen Partikeln, wobei ein direkter Kontakt der Flamme mit den Partikeln erzeugt wird.

Beim Schweißen bestimmter metallischer Werkstoffe werden feine Stäube bzw. Rauch aus brennbaren metallischen Partikeln freigesetzt. Insbesondere der bei der Verarbeitung von Zirkonium freigesetzte Schweißrauch ist extrem brennbar und explosionsgefährlich. Eine Möglichkeit zur Herabsetzung des Brand- oder Explosionsrisikos besteht darin, die Schweißvorgänge innerhalb einer gekapselten Schweißkammer durchzuführen. Dennoch besteht im trockenen Zustand des Schweißrauchs sowie bei unsachgemäßer Handhabung Explosionsgefahr. Nach derzeitigem Stand der Technik wird der die brennbaren Partikel enthaltende Rauch oder Staub, der beim Schweißen innerhalb der Schweißkammer entsteht, daher mittels einer Absaugvorrichtung in eine Wasservorlage geleitet und dort teilweise gebunden. Allerdings kann die Wasservorlage den Rauch bzw. Staub in der Regel nicht vollständig binden, so dass der Einsatz eines der Wasservorlage nachgeschalteten Reststaubfilters notwendig ist, in dem sich weiterhin entflammbares Material ansammelt. Durch das Eindringen von angesaugtem Luftsauerstoff in die Ansaugstrecke oder in den Reststaubfilter besteht nach wie vor ein Gefahrenpotential, das nur durch eine vergleichsweise umständliche Handhabung des Schweißrauchs im nassen bzw. feuchten Zustand einigermaßen sicher beherrschbar ist.

Der Erfindung liegt daher die Aufgabe zu Grunde, ein Verfahren anzugeben, das bei gering gehaltenem apparativen und betrieblichen Aufwand eine sichere Beherrschung von brennbarem Schweißrauch ermöglicht.

Diese Aufgabe wird erfindungsgemäß gelöst durch die Merkmale des Anspruchs 1.

Die Erfindung geht von der Überlegung aus, dass eine Gefährdung der Umgebung durch brennbaren Schweißrauch durch eine möglichst frühzeitige und möglichst vollständige, kontrollierte Oxidation der brennbaren Partikel vermieden werden kann, welche dadurch unbrennbar gemacht werden. Dabei sollte ein Kontakt der Partikel sowohl mit einer offenen Flamme als auch mit einer heißen Oberfläche vermieden werden, um eine Entzündung zu vermeiden, und um nicht durch die Oxidationsapparatur selber eine Gefahrenquelle zu schaffen.

Vielmehr ist zur Energieeinbringung nunmehr erfindungsgemäß ein berührungsloses Wirkprinzip vorgesehen: Durch eine vorzugsweise möglichst weit vorn im Anfangsbereich der Ansaugstrecke positionierte Oxidationsapparatur werden die vorbeiströmenden Metallpartikel möglichst frühzeitig auf ihre Oxidationstemperatur aufgeheizt. Aufgrund der Aufheizung der Partikel kommt es zu einer gesteigerten, aber dennoch kontrollierten Oxidation an der Oberfläche mit dem umgebenden Luftsauerstoff (oder auch mit einem anderen Oxidationsmittel). Die Gefahr einer Entzündung des Schweißrauchs ist bei diesem Konzept, wie sich im Rahmen modellmäßiger Überschlagsrechnungen herausgestellt hat, bei geeigneter Steuerung oder Regelung der Betriebsparameter ausgesprochen gering.

Die Energieeinbringung in die Schweißrauchpartikel kann dabei innerhalb einer vergleichsweise kurzen Wegstrecke ihres Strömungsweges im Absaugrohr berührungsfrei und mit relativ hohem Wirkungsgrad erfolgen. In Abhängigkeit von überwachten und einstellbaren Parametern, z. B. der Massen- oder Volumenstromdichte im Absaugrohr, der Strömungsgeschwindigkeit und/oder des Luft- bzw. Sauerstoffanteils im Schweißrauch, ist eine genaue, zuverlässige und besonders bedarfsgerechte Dosierung der Energieeinbringung und damit auch der Oxidationsrate ermöglicht.

Der Begriff "Absaugrohr" ist hier nicht einschränkend im Sinne eines starren Rohres auszulegen. Vielmehr kann beispielsweise auch ein flexibler Schlauch oder dergleichen zum Einsatz kommen.

Die Oxidationsapparatur kann in verschiedener Weise ausgeführt sein. Insbesondere können Magnetrons (zur Erzeugung von Mikrowellenstrahlung) oder Laser, wie z. B. Diodenlaser oder YAG Laser, Verwendung finden. Alternativ oder zusätzlich können Lampen, wie z. B. Halogenlampen oder Infrarotlampen, sowie Heizspiralen oder Induktionsspulen Verwendung finden. Die verschiedenen Ausführungen bzw. mehrere ähnlich gestaltete Komponenten können auch parallel und/oder hintereinander geschaltet betrieben werden. Die Oxidationsapparatur ist vorteilhafterweise baulich im Bereich des Absaugrohrs vorgesehen. Je nach Ausgestaltung kann sie beispielsweise in das Absaugrohr integriert sein, neben ihm angeordnet und ggf. durch einen Zugang mit seinem Innenbereich verbunden sein, oder um das Absaugrohr herum angeordnet sein.

Vorteilhafterweise umfasst die Oxidationsapparatur einen Erzeuger von elektromagnetischer Strahlung. Eine bevorzugte Strahlungsform ist dabei Mikrowellenstrahlung. Aufgrund des Wellenlängenbereiches zwischen ca. 1 m und 1 mm eignet sich diese Strahlung zur dielektrischen Erhitzung bzw. zur Anregung von Dipol- und Multipolschwingungen von Molekülen oder geladenen Teilchen. Der Erzeuger der Mikrowellenstrahlung wird dabei vorzugsweise derart eingesetzt, dass ein möglichst großer Raumbereich möglichst homogen von der Mikrowellenstrahlung durchsetzt wird. Dazu kann das Absaugrohr als im Frequenzbereich von Mikrowellen resonanter Hohlleiter ausgebildet sein.

Alternativ oder in Kombination dazu kann zur Erhitzung der Partikel Laserstrahlung verwendet werden, die von mindestens einem Laser, insbesondere einem Diodenlaser oder YAG Laser, erzeugt wird. Ein Nd:YAG-Laser, der als aktives Medium einen Neodym-dotierten YAG-Kristall verwendet, erzeugt Strahlung im Infrarotbereich mit der Wellenlänge 1064 nm. Diodenlaser eignen sich in besonderer Weise aufgrund ihrer kompakten Bauweise als Oxidationsapparatur.

Die Erhitzung der Partikel kann in vorteilhafter Ausgestaltung auch durch eine Halogenlampe oder dergleichen mit geeignet dimensionierter Strahlungsleistung erreicht werden.

Eine weitere vorteilhafte Ausführungsform der Oxidationsapparatur umfasst eine elektrische Heizspirale (Widerstandsheizung). Ein durch die Heizspirale fließender elektrischer Strom führt zu der Erhitzung der Heizspirale und somit zur Erhitzung des im Absaugrohr strömenden Partikel- bzw. Gasstroms. Die Heizspirale kann um das Absaugrohr herumgewickelt sein. Sie kann auch in das Absaugrohr eingesetzt sein. Falls die Heizspirale das Absaugrohr umschließt, besteht dieses vorzugsweise aus einem Material, welches die von der Heizspirale abgegebene Wärme möglichst verlustfrei in den Innenraum des Absaugrohres leitet.

Vorzugsweise wird als Oxidationsapparatur eine mit Wechselstrom beaufschlagbare Induktionsspule verwendet. Durch eine einfach zu bewerkstelligende Variation der Parameter elektrische Stromstärke, elektrische Spannung und Frequenz des die Induktionsspule durchfließenden Wechselstroms kann die zur Oxidation benötigte Energie auf die Partikel übertragen werden. Für eine besonders hohe Effizienz der Wirbelstrominduktion in den Schweißrauchpartikeln weist die Induktionsspule vorteilhafterweise eine Anzahl von um das Absaugrohr gewickelten Drahtwindungen auf. Alternativ könnte die Induktionsspule im entsprechenden Rohrabschnitt auch selbst die Rohrwandung bilden. Im Gegensatz zu einer Anordnung, die ausschließlich die Streufelder am Rand bzw. außerhalb der Spulenwicklung nutzt, ist somit praktisch das gesamte elektromagnetische Feld im Spuleninneren, wo die erzielbare Feldstärke am größten ist, für die Energieübertragung wirksam. Falls die Induktionsspule das Absaugrohr umschließt, ist dieses vorteilhafterweise aus einem Material gefertigt, das die Induktionsfelder möglichst wenig abschirmt oder abschwächt, z. B. aus einem Kunststoff.

Unter Umständen reicht der im angesaugten Schweißrauch vorhandene Sauerstoffanteil bereits aus, um die die gewünschte Oxidation der Partikel im Absaugrohr ablaufen zu lassen. Vorteilhafterweise jedoch finden die Schweißvorgänge innerhalb einer gegenüber der Umgebung weitgehend gekapselten Schweißkammer statt, insbesondere in einer Inertgasatmosphäre mit herabgesetztem oder gar nicht vorhandenem Sauerstoffanteil, so dass das Explosions- und Brandrisiko jedenfalls innerhalb der Schweißkammer minimiert ist. In diesem Fall kann es notwendig oder zumindest vorteilhaft sein, den über das Absaugrohr aus der Schweißkammer angesaugten Schweißrauch oder - staub vor dem Erreichen der Oxidationsapparatur gezielt mit einem Oxidationsmittel, insbesondere mit sauerstoffhaltiger Umgebungsluft, anzureichern. Dazu weist das Absaugrohr vorteilhafterweise eine oder mehrere Lufteinlassöffnungen oder -schlitze auf, die in Strömungsrichtung des Rauches oder Staubes gesehen vor der Oxidationsapparatur angeordnet sind, so dass beim Betrieb infolge der Sogwirkung eine für die gewünschte Oxidationsreaktion geeignete Menge von Umgebungsluft bedarfsgerecht mit angesaugt und vor Erreichen der Erhitzungs- und Oxidationszone mit dem Schweißrauch vermischt wird.

Die mit der Erfindung erzielten Vorteile bestehen insbesondere darin, dass durch eine berührungslose Aufheizung eine kontrollierte vollständige Oxidation von brennbaren Rauch- oder Staubpartikeln herbeigeführt wird, die die Partikel für die weitere Handhabung - jedenfalls in Bezug auf das Brand- oder Explosionsrisiko - ungefährlich macht. Die apparativen Voraussetzungen sind gering, ebenso der Platzbedarf für die benötigten technischen Komponenten. Auf eine aufwändige Nasshandhabung des Rauches bzw. der Stäube kann verzichtet werden. Zusätzliche Behandlungszeiten fallen ebenfalls nicht an. Ein Sammeln vollständig oxidierter Stäube reduziert die Gefahren beim Umgang mit diesem Abfallprodukt auf ein absolutes Minimum. Das System ist wartungsarm. Eine Reinigung der Absaug- und Filteranlage ist nur vergleichsweise selten notwendig, was die damit verbundenen Maschinenausfallzeiten kurz hält. Die mit den Prozessabläufen befassten Mitarbeiter oder Maschinenführer sind einem geringeren Gefährdungspotential als bislang ausgesetzt.

Das geschilderte Konzept kommt bevorzugt bei der Behandlung von Schweißrauch zum Einsatz, ist aber nicht darauf beschränkt. Ein weiteres Anwendungsfeld kann beispielsweise die Zerspanung (Bohren, Drehen Fräsen, Sägen, Schleifen etc.) metallhaltiger Werkstücke sein. Auch muss die Reduzierung einer Brandgefahr nicht unbedingt im Vordergrund des Interesses stehen. Vielmehr könnte eine berührungslose und ggf. flammenlose Aufheizung von Rauchpartikeln und dergleichen in der beschriebenen Art auch aus anderen technischen Zielsetzungen heraus erfolgen. Wesentliche Voraussetzung ist somit lediglich die Freisetzung bzw. das Vorhandensein von in einem Trägergasstrom transportierbaren Partikeln, die überhaupt den erfindungsgemäß eingesetzten Wirkprinzipien zugänglich sind, üblicherweise also Partikeln auf metallischer Basis oder mit einem metallischen Anteil.

Ein Ausführungsbeispiel der Erfindung wird anhand einer Zeichnung näher erläutert. Darin zeigen in jeweils stark schematisierter Darstellung:
- Fig. 1: eine Schweißanlage mit einer Absaugvorrichtung für Schweißrauch und mit einer Induktionsspule als Oxidationsapparatur, und
- Fig. 2: eine Schweißanlage mit einer Absaugvorrichtung für Schweißrauch und mit einer alternativen Oxidationsapparatur, z. B. einem Mikrowellenstrahlungserzeuger.

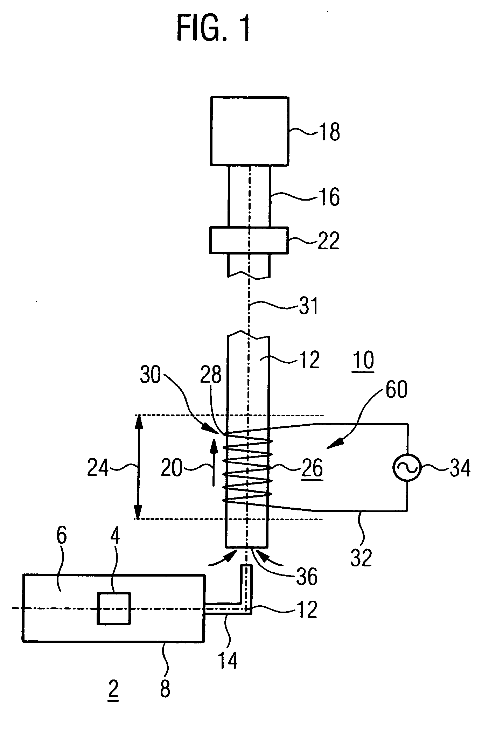

Die in der Fig. 1 dargestellte Schweißanlage 2 umfasst ein nicht näher dargestelltes Schweißgerät 4 / einen Schweißroboter, das / der im Innerraum 6 einer Schweißkammer 8 angeordnet ist. Dort werden Werkstücke, die aus Zirkonium oder aus einer Zirkoniumlegierung bestehen oder diese Materialien als einen wesentlichen Bestandteil enthalten, miteinander verschweißt, z. B. bei der Produktion von Brennstabhüllrohren im nukleartechnischen Umfeld. Die Schweißvorgänge finden im Innenraum 6 der gegenüber der Umgebung gasdicht gekapselten Schweißkammer 8 in einer zumindest zum Teil inertisierten, sauerstoffarmen Atmosphäre statt, die durch hier nicht dargestellte Versorgungssysteme bereit gestellt wird.

Beim Verschweißen der Werkstücke entstehen in der Schweißgasatmosphäre gesundheitsschädliche und bei Kontakt mit Sauerstoff leicht entflammbare Stäube aus feinsten Zirkonium- und anderen Partikeln, so genannter Schweißrauch. Beim Betrieb der Anlage wird der Schweißrauch fortwährend und kontinuierlich aus der Schweißkammer 8 abgesaugt. Dazu ist eine Absaugvorrichtung 10 mit einem Absaugrohr 12 vorgesehen. Das Absaugrohr 12, das beispielweise auch als flexibler Schlauch realisiert sein kann, ist mit seinem ersten Ende 14 an die Schweißkammer 8 angeschlossen. Alternativ kann auch eine Saugglocke über einer nicht vollständig durch eine Schweißkammer von der Umgebung abgeschirmten Schweißregion angeordnet sein. Das von der Schweißkammer 8 abgewandte zweite Ende 16 des Absaugrohres 12 ist an einen hier nur schematisch dargestellten Vakuumsauger 18 bzw. eine Vakuumpumpe bzw. ein Sauggebläse (beispielsweise in der Art eines Radialverdichters) angeschlossen. In Strömungsrichtung 20 des Schweißrauches gesehen vor der Vakuumpumpe bzw. vor dem Sauggebläse befindet sich eine hier ebenfalls nur schematisch angedeutete gasdurchlässige Filtereinheit 22 bzw. ein Staubbeutel oder dergleichen, in der / dem angesaugte feste Partikel - abhängig von der Porengröße und der Art des Filtermaterials - festgehalten und gesammelt werden.

Die Absaugvorrichtung 10 ist für ein besonders geringes Brand- und Explosionsrisiko bei der Handhabung des Schweißrauches bzw. seiner festen Rückstände in der Filtereinheit 22 konzipiert. Zu diesem Zweck ist eine gezielte und kontrollierte Oxidation der im Schweißrauch vorhandenen zirkoniumhaltigen Partikel innerhalb einer Erhitzungs- und Oxidationszone 24 im Absaugrohr 12 vorgesehen. Dort ist nämlich eine Induktionsspule 26 angeordnet, die eine Anzahl von um das Absaugrohr 12 gewickelten Drahtschleifen oder Drahtwindungen 28 aufweist. Alle Drahtwindungen 28 zusammen bilden die Spulenwicklung 30. Die Symmetrieachse der Induktionsspule 26 fällt mit der Mittelachse 31 des Absaugrohres 12 zusammen. Die Induktionsspule 26 ist in einen Stromkreis 32 mit einer Wechselstromquelle 34 geschaltet, so dass bei geschlossenem Stromkreis 32 ein zeitlich veränderliches, vorzugsweise periodisches elektromagnetisches Wechselfeld innerhalb der Spulenwicklung 30 erzeugt wird, welches den Innenraum des Absaugrohres 12 durchdringt. In der Anfangs- und Endregion der Spulenwicklung 30 sind die induzierten elektrischen und magnetischen Felder räumlich vergleichsweise inhomogen.

Wenn die zirkoniumhaltigen Partikel die Erhitzungs- und Oxidationszone 24 im Absaugrohr 12 durchströmen, werden in ihnen elektrische Wirbelströme ausgelöst, die eine Aufheizung der Partikel zur Folge haben. Dadurch wird eine verstärkte Reaktion mit im Volumenstrom vorhandenem Luftsauerstoff, d. h. eine Oxidation, gefördert. Bei geeigneter Abstimmung der Betriebsparameter läuft die Oxidation sehr effektiv innerhalb einer kurzen Wegstrecke und dennoch sehr kontrolliert mit geringem Brand- oder Explosionsrisiko ab, so dass sich in der Filtereinrichtung 22 lediglich vergleichsweise harmlose und gut zu handhabende, vollständig oxidierte Partikel ansammeln.

Zur Anreicherung des angesaugten Schweißrauches mit Sauerstoff weist das Absaugrohr 12 in Strömungsrichtung 20 gesehen vor der Induktionsspule 26 eine Anzahl von Lufteinlassöffnungen 36 auf, die beispielsweile wie hier im Ausführungsbeispiel die Gestalt eines Ringschlitzes zwischen zwei einander gegenüberstehenden Rohrabschnitten oder -segmenten haben können. Selbstverständlich sind aber auch andere Einlassgeometrien möglich.

Wesentliche Betriebsparameter, die vor allem durch die strömungsführende Geometrie, die Druckverhältnisse und durch die (ggf. einstellbare) Saugleistung des Vakuumsaugers 18 bestimmt sind, sind die Strömungsgeschwindigkeit des partikelhaltigen Schweißrauchs innerhalb der Erhitzungs- und Oxidationszone 24 sowie die Volumen- bzw. Massenstromdichte. Weiterhin hat der Sauerstoffanteil im Volumenstrom einen wesentlichen Einfluss auf die Oxidationsrate. Gut kontrollierbar und bedarfsweise einstellbar, z. B. in Anhängigkeit von den vorgenannten Größen, die sich durch geeignete Sensoren überwachen lassen, sind die elektrische Stromstärke, die elektrische Spannung und die Frequenz des die Induktionsspule 26 beaufschlagenden Wechselstroms. Alternativ oder zusätzlich ist es bei vorgegebenen oder bekannten elektrischen Kenngrößen auch möglich, die Luft- bzw. Sauerstoffzufuhr variabel zu steuern, z. B. durch verstellbare Drosselklappen oder dergleichen in den Lufteinlassöffnungen 36.

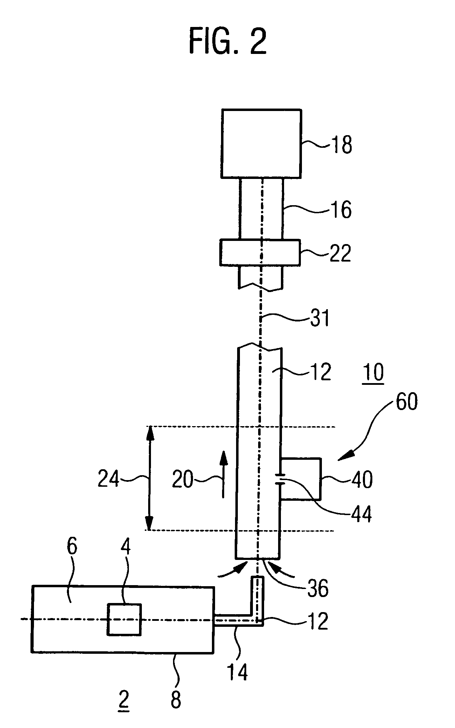

Die in der Fig. 2 dargestellte Absaugvorrichtung 10 unterscheidet sich von der in Fig. 1 gezeigten Ausführungsform nur in der Ausgestaltung der Oxidationsapparatur 60. Diese ist hier beispielsweise durch einen Mikrowellenstrahlungserzeuger 40 gegeben, welcher einen Magnetron beinhaltet. Die im Magnetron erzeugte Mikrowellenstrahlung wird von dem Mikrowellenstrahlungserzeuger 40 durch einen Zugang 44 in das Absaugrohr 12 geleitet. Der Zugang 44 zwischen dem Mikrowellenstrahlungserzeuger 44 und dem Absaugrohr 12 kann beispielsweise durch einen Hohlleiter realisiert sein. In der Erhitzungs- und Oxidationszone 24 werden die in Strömungsrichtung 20 strömenden Partikel von den Mikrowellenstrahlen erhitzt, worauf an ihrer Oberfläche die Oxidation einsetzt. Der Erhitzungs- und Oxidationszone entspricht in dieser Ausführung gerade der von den Mikrowellen durchdrungene Bereich des Absaugrohres 12. Das Absaugrohr 12 kann in diesem Zusammenhang auch als Hohlkörper verstanden werden, dessen innere Oberfläche die Mikrowellenstrahlung (teilweise) reflektiert. Um ein möglichst großes und homogenes von den Mikrowellenstrahlen durchsetztes Raumgebiet zu realisieren, kann das Absaugrohr 12 in der Erhitzungs- und Oxidationszone 24 durch die Mikrowellenstrahlung reflektierende Komponenten ergänzt werden. Das Absaugrohr kann auch in seiner Form und/oder seinen Materialeigenschaften in dem Bereich der Erhitzungs- und Oxidationszone 24 von seiner Ausgestaltung in Strömungsrichtung 20 vor oder hinter dieser Zone abweichen. Der Mikrowellenstrahlungserzeuger 40 kann auch in das Absaugrohr 12 baulich integriert sein.

In alternativer Ausführung kann, entsprechend der Erfindung (Siehe Anspruch 1), die in Fig. 2 schematisch dargestellte Oxidationsapparatur 60 einen Laser, insbesondere einen Dioden- oder YAG-Laser, eine Halogenlampe oder eine elektrische Heizspirale umfassen, welche auf den im Absaugrohr 12 strömenden Rauch einwirken und dessen Aufheizung und kontrollierte Oxidation bewirken. Eine Kombination von mehreren der genannten Energie- bzw. Wärmequellen ist möglich.

Um die Oxidationseffizienz zu steigern, kann das Absaugrohr 12 im Bereich der Oxidationsapparatur 60 eine labyrinthähnliche Struktur in der Art von sogenannten Staubfallen aufweisen, wozu beispielsweise entsprechende Trenn- und/oder Leitbleche und/oder Umlenkstücke in der Rohrleitung angeordnet sein können.

Die Strömungsrichtung des Staubes oder Rauches sollte - zumindest im unmittelbaren Einwirkungsbereich der Oxidationsapparatur 60 - vorzugsweise vertikal, insbesondere von unten nach oben, ausgerichtet sein.

### Bezugszeichenliste

| | |
|---|---|
| 2 | Schweißanlage |
| 4 | Schweißgerät |
| 6 | Innenraum |
| 8 | Schweißkammer |
| 10 | Absaugvorrichtung |
| 12 | Absaugrohr |
| 14 | erstes Ende |
| 16 | zweites Ende |
| 18 | Vakuumsauger |
| 20 | Strömungsrichtung |
| 22 | Filtereinheit |
| 24 | Erhitzungs- und Oxidationszone |
| 26 | Induktionsspule |
| 28 | Drahtwicklung |
| 30 | Spulenwicklung |
| 31 | Mittel- bzw. Symmetrieachse |
| 32 | Stromkreis |
| 34 | Wechselstromquelle |
| 36 | Lufteinlassöffnung |
| 40 | Mikrowellenstrahlungserzeuger |
| 44 | Zugang |
| 60 | Oxidationsapparatur |

## Patentansprüche

1. Verfahren zur Behandlung von metallischen Partikel enthaltendem Schweißrauch, **dadurch gekennzeichnet, dass** der Schweißrauch in ein Absaugrohr (12) angesaugt wird und in diesem durch Energiezufuhr erhitzt und dabei oxidiert wird, wobei sowohl ein Kontakt der Partikel mit einer offenen Flamme als auch mit einer heißen Oberfläche vermieden wird, und wobei die Energie durch wenigstens eine Oxidationsapparatur (60) mit berührungslosem Wirkprinzip aus nachstehender Gruppe zugeführt wird: Mikrowellenstrahlungserzeuger, Laser, insbesondere Dioden- oder YAG Laser, Heiz- oder Halogenlampe, Induktionsspule (26).

2. Verfahren nach Anspruch 1, bei dem der Schweißrauch als kontinuierlicher Strom durch eine Erhitzungs- und Oxidationszone (24) im Absaugrohr (12) geführt wird.

3. Verfahren nach Anspruch 1 oder 2, bei dem der Schweißrauch vor der Erhitzung mit einem ein Oxidationsmittel enthaltenden Gas oder Gasgemisch, insbesondere mit Umgebungsluft, angereichert wird.

4. Verfahren nach einem der Ansprüche 1 bis 3, bei dem der zu behandelnde Schweißrauch beim Schweißen von Zirkonium-basierten Werkstoffen freigesetzt wird.

5. Verfahren nach einem der Ansprüche 1 bis 4, wobei als Oxidationsapparatur (60) eine mit Wechselstrom beaufschlagbare Induktionsspule (26) vorgesehen ist, mit der ein elektromagnetisches Wechselfeld innerhalb der Absaugrohres (12) erzeugt wird, wobei die Induktionsspule (26) eine Anzahl von um das Absaugrohr (12) gewickelten Drahtwindungen (28) aufweist.

## Claims

1. A method for treating welding fumes containing metallic particles, **characterized in that** the welding fumes are sucked into a suction pipe (12) and are heated therein by energy input and oxidized thereby, wherein a contact of the particles both with a naked flame and with a hot surface is avoided and wherein the energy is input by at least one oxidation apparatus (60) with a non-contact operating principle, selected from the following group: microwave radiation generator, laser, in particular diode laser or YAG laser, heating lamp or halogen lamp, induction coil (26).

2. The method of claim 1, wherein the welding fumes are guided as a continuous flow through a heating and oxidation zone (24) in the suction pipe (12).

3. The method of claim 1 or 2, wherein the welding fumes, prior to being heated, are enriched with a gas or gas mixture containing an oxidizing agent, in particular with ambient air.

4. The method of any of claims 1 to 3, wherein the welding fumes to be treated are released during the welding of zirconium-based materials.

5. The method of any of claims 1 to 4, wherein an induction coil (26) which can be charged with alternating current is provided, with which an electromagnetic alternating field is generated inside the suction pipe (12), wherein the induction coil (26) includes a plurality of wire turns (28) wound around the suction pipe (12).

## Revendications

1. Procédé pour le traitement de fumées de soudure contenant des particules métalliques, **caractérisé en ce que** les fumées de soudure sont aspirées dans un tuyau d'aspiration (12) et sont chauffées là-dedans par alimentation en enérgie et oxydées par cela, dans lequel un contact des particules et avec une flamme nue et avec une surface chaude est évité et dans lequel l'énergie est alimentée par au moins un appareil d'oxydation (60) avec un principe d'opération sans contact, choisi du groupe suivant: générateur de radiation micro-ondes, laser, en particulier laser à diodes ou laser YAG, lampe de chauffage ou lampe à halogène, bobine d'inductance (26).

2. Procédé selon la revendication 1, dans lequel les fumées de soudure sont guidées comme un flux continu à travers une zone de chauffage et d'oxydation (24) dans le tuyau d'aspiration (12).

3. Procédé selon la revendication 1 ou 2, dans lequel les fumées de soudure, avant d'être chauffées, sont enrichies d'un gaz ou d'une mélange de gaz contenant un agent d'oxydation, en particulier d'air ambiant.

4. Procédé selon l'une quelconque des revendications 1 à 3, dans lequel les fumées de soudure à être traitées sont libérées pendant la soudure de matériaux à base de zirconium.

5. Procédé selon l'une quelconque des revendications 1 à 4, dans lequel une bobine d'inductance (26) qui peut être chargée de courant alternatif est prévue, à l'aide de laquelle un champ alternatif électromagnétique est généré à l'intérieur du tuyau d'aspiration (12), dans lequel la bobine d'inductance (26) comprend une pluralité de tours de fil (28) bobinés autour du tuyau d'aspiration (12).
